# EUROPEAN PATENT APPLICATION

(11) **EP 4 336 144 A1**
(43) Date of publication of application: **13.03.2024**
(21) Application number: 22194197.4
(22) Date of filing: 06.09.2022
(51) Int. Cl.: G01C 21/16, G01C 21/30, G01C 21/00

(54) **METHOD AND SYSTEM FOR DETERMINING A PATH OF A VEHICLE AND METHOD FOR UPDATING INFORMATION CONTAINED IN A DIGITAL MAP**

(71) Applicant: Aptiv Technologies Limited, St. Michael (BB)
(72) Inventor: LARSSON, Erik Per Victor Henning, Gothenburg (SE)
(74) Representative: Novagraaf International SA

(57) **Abstract**

The invention relates to a method for determining a path of a vehicle comprising the steps: determining a first trajectory of the vehicle over a time interval based on information extracted from a digital map, determining, over said time interval, a second trajectory of the vehicle based on information extracted from at least one vehicle sensor, comparing the first and the second trajectories to identify differences between the information extracted from the digital map and the at least one vehicle sensor, and determining a corrected path of the vehicle based on the identified differences. The invention relates furthermore to method for updating information contained in a digital map and system for determining a path of a vehicle.

## Description

### TECHNICAL FIELD

The present invention relates in a first aspect to a method for determining a path of a vehicle, in particular a car. In a second aspect, the present invention relates to a system for determining a path of a vehicle, in particular a car, according to the preamble of claim 15. In a third aspect, the invention relates to a method for updating information contained in a digital map. A generic system for determining a path of a vehicle comprises a digital map, at least one vehicle sensor for measuring at least one of positions or movements of the vehicle in space, and a control unit for controlling the at least one vehicle sensor and for interacting with the digital map.

### BACKGROUND

The inaccuracy of GPS is most often solved through differential corrections, which rely on having a base station for corrections nearby. Other methods use radar/vision maps, matching with the current sensor data to find a more correct position. Some solutions use an inertia sensors or IMUs to perform tracking with different types of Kalman filters. Differential corrections require a dense infrastructure of base stations to correctly capture the local inaccuracies. Some type of sensor-aggregated maps require a complex map which needs to be robust to changes over time. These issues are known and are often approached through complex and/or expensive solutions as mentioned above.

Another issue with GPS positioning is that maps are often outdated and can be weeks, months, or even years old. Determining a path of a vehicle in such an outdated map can difficult and can be misleading to a user. Up to now, validation is often done through matching of landmarks and/or lanes. Landmark matching requires high quality maps which may not be available. Also, landmarks can change. Lane mark matching requires vision equipment and also visible lanes which is not always given. There have been efforts to solve this by combining or fusing data from a plurality of sensors.

Therefore, there is a need for a method and a system for determining a path of a vehicle which are less costly and nonetheless achieve good results. Furthermore, a method for updating information contained in a digital map shall be provided.

### SUMMARY

According to the present invention, the above-outlined problem is solved by the method having the features of claim 1, the method according to claim 13 and the system having the features of claim 15.

Preferred variants of the methods according to the invention and advantageous embodiments of the system according to the invention will be described in the following, in particular in relation to the dependent claims and the figures.

The method for determining a path of a vehicle, in particular a car, according to claim 1 comprises the following steps: determining a first trajectory of the vehicle over a time interval based on information extracted from a digital map, determining, over said time interval, a second trajectory of the vehicle based on information extracted from at least one vehicle sensor, comparing the first and the second trajectories to identify differences between the information extracted from the digital map and the at least one vehicle sensor, and determining a corrected path of the vehicle based on the identified differences.

The generic system for determining a path of a vehicle, in particular a car, is further developed according to the invention in that the control unit is configured furthermore for determining, over said time interval, a second trajectory of the vehicle based on information extracted from the at least one vehicle sensor, comparing the first and the second trajectories to identify differences between the information extracted from the digital map and the at least one vehicle sensor, and determining a corrected path of the vehicle based on the identified differences.

The method for updating information contained in a digital map according to the invention comprises the steps of determining a path of a vehicle according to the inventive method and updating at least portions of the digital map based on the determined path of the vehicle.

Advantageously, the system according to the invention is configured for carrying out the method according to the invention.

A trajectory can be a set of consecutive locations of the vehicle in space. E.g., the trajectory can be a portion of a road in a digital map on which the vehicle moves in the considered time interval. The locations can be at least two-dimensional locations, i.e., they can comprise, in each case, two coordinates in the direction of the axes of a coordinate system. The coordinate system can, e.g., be the coordinate system of the digital map. The locations can also be three-dimensional locations, i.e., they can comprise a height coordinate in addition to, e.g., the two coordinates in the direction of the axes of the digital map. The considered time interval can be, e.g., from fractions of a second to a many seconds. A trajectory can also be termed trail or path. For the purposes of the description of the present invention, the vehicle can also be termed host.

The vehicle sensor or sensors can be mechanically coupled to the vehicle. They can, e.g., be mounted on the vehicle. Being mechanically coupled to the vehicle can mean that the respective vehicle sensor is mounted in such a way to or on the vehicle that a movement of the respective sensor is essentially the same movement as the movement of the vehicle itself.

Updating the digital map means replacing portions of information in the map with new information gathered from a determined path of the vehicle.

It can be viewed as a key idea of the invention to compare a trail of a vehicle and an expected path from a digital map and to derive respective differences from this comparison. Also, a GPS error can be estimated from the localisation offsets.

A first important advantage of the method for determining a path of a vehicle or a host according to the present invention is that, apart from a digital map, it requires only data from vehicle sensors of the host vehicle.

As regards the digital map, an advantage is also that a low-detailed map, as present in common navigation applications, is sufficient. In particular, no unusual prior knowledge of the respective areas, such as provided by radar maps or the like, is necessary.

A further advantage of the invention is that the computational expenditure is rather low and, thus, the system according to the invention can be realized at low costs.

The invention is expected to be particularly beneficial for curved roads where GPS accuracy is more important than on comparatively feature-less roads.

The inventive method for updating information contained in a digital map provides potentially a highly effective way to enhance the quality and dependability of digital maps. The method as such benefits from all the advantages of the method for determining a path of a vehicle according to the present invention, i.e., its hardware and software requirements are comparatively low and it can, in principle, be applied by a large number of users. The speed with which the quality of available maps will improve is expected to rise with the number of users participating in the updating effort. Thus, the invention can potentially benefit from crowd behavior effects.

The differences between the information extracted from the digital map and the information extracted from the at least one vehicle sensor can be offsets of the localisation of the vehicle with regard to the information provided by the map. Thus, in an advantageous variant of the method according to the invention the step of determining the corrected path of the vehicle comprises determining localisation offsets between the information extracted from the digital map and the at least one vehicle sensor.

The determined corrected path of the vehicle can be displayed in the digital map.

In principle, it would be possible to determine a localisation of the vehicle within the digital map by a sensor which is not mechanically coupled to the vehicle itself, i.e., by an external sensor measuring a position of the vehicle. In a preferred embodiment of the invention, though, a localisation of the vehicle within the digital map is determined using a sensor which is mounted on the vehicle. In an advantageous embodiment, the step of determining the second trajectory of the vehicle comprises determining a localisation of the vehicle within the digital map by a sensor which interacts with an external entity. This can be, e.g., a sensor which interacts with an rf-network and determines a location, e.g., by triangulation. A particularly preferred embodiment of the method of the invention comprises using a GPS-sensor for determining a localisation of the vehicle within the digital map.

For the control unit components known in the art can be used. Typically, programable devices such as a microcontroller or an FPGA can be used. For the purposes of interaction with external entities via the internet the control unit advantageously has an rf-internet interface.

In principle, it would be possible for the vehicle sensors to measure a sequence of two-dimensional or three-dimensional locations of the vehicle from which locations the second path can be put together. In a preferred embodiment of the method according to the invention, though, the step of determining the second trajectory of the vehicle comprises measuring at least a speed and a yaw rate using the vehicle sensors. A speed and a yaw rate are also sufficient to deduct therefrom a two-dimensional trajectory.

The second trajectory can be measured in relation to a coordinate system which is at rest with respect to the vehicle at a certain point in time, e.g., at the beginning or at the end of the time interval during which the first and the second trajectories are being determined.

Generally, any sensors suitable for measuring at least one of a movement and a position of the vehicle in space can be used as vehicle sensors. The vehicle sensors can also be termed motion sensors or vehicle motion sensors. More specifically, the vehicle sensors can advantageously comprise at least one of: optical sensors, ultrasound sensors, cameras, stereo cameras, inertia sensors, two-dimensional laser scanners, three-dimensional laser scanners, radar sensors, and wheel sensors which measure a rotation speed and/or a rotation status of an individual wheel. The vehicle sensors can operate independently from any external devices. This would be the case, e.g., for inertia sensors. It is also possible for the vehicle sensors to operate in relation to external devices like, e.g., transmitters, landmarks, etc..

Advantageously, the step of determining the second trajectory of the vehicle comprises averaging the measurement data of at least one of the vehicle sensors using moving averages. Thus, measurement noise can be averaged out. Preferably, a depth of the moving averages is chosen in dependence of typical rates of change of the measurement data of the vehicle sensors. Further improvements are possible, if the depth of the moving average is dynamically adapted to a rate of change of the measurement data of at least one of wheel sensors and inertia sensors.

In principle, the method for determining a path of a vehicle according to the invention works with one digital map which is, e.g., installed in a factory-made system. Preferably, though, the digital map is being downloaded from a server, in particular in predefined and/or regular time intervals. Here, the inventive method for updating a digital map comes in handy, particularly if many users are applying it. Thus, a downloaded digital map will have improved in each case as compared to the last downloaded map. Correspondingly, a preferred variant of the method for updating a digital map comprises communicating, e.g., via the internet, to other vehicles at least portions of the updated digital map.

Advantageously, the step of comparing the first and the second trajectories comprises shifting the second trajectory onto the first trajectory by a geometrical transformation.

Advantageously, the geometrical transformation is chosen such that the differences between the first trajectory and the shifted second trajectory are minimized.

Advantageously, the geometrical transformation comprises at least one of the following: a translation; a rotation; a scaling; a shearing. A translation shifts each point of, e.g., the second trajectory, by a constant vector, i.e., by a certain amount in a certain direction. A rotation rotates the second trajectory by an angle around a rotation center. In a scaling, each of the coordinates of the points of, e.g., the second trajectory, is multiplied by a constant factor. A shearing, also known as a shear mapping or shear transformation, is a linear map that displaces each point, e.g., of a trajectory, in a fixed direction which is defined by an axis which runs through the origin. The amount of the shift for a certain point is proportional to its orthogonal distance from the axis. A scaling and/or a shearing can, e.g., be useful to correct for miscalibrations of a vehicle sensor.

The differences between the first trajectory and the second trajectory can be determined by using a mathematical measure. E.g., the differences between the first trajectory and the second trajectory can advantageously be determined by calculating a root mean square deviation between corresponding points of the first trajectory and the second trajectory.

Increasing the considered time interval, i.e., increasing the length of the first and the second trajectories to be compared generally leads to increasing deviations or differences between the first and the second trajectories. Advantageously, the method according to the invention can comprise correcting for the length of the considered time interval and/or the length of the first and the second trajectories by applying a normalization of the sum in relation to one of the length of first and/or second trajectory, i.e., the travelled path, and/or in relation to the length of the considered time interval, i.e., the travel time.

The geometrical transformation can be a rigid or isometrical transformation, i.e., a transformation that preserves the distances between each pair of points in the transformed object, e.g., the shifted trajectory .

The finding of suitable geometrical transformation can be set up as an optimization problem to find the respective rigid transformation that minimizes the distance between all closest points. This can be done iteratively until a predefined threshold of alignment differential is reached or until a change in a determined difference between the first and the second trajectories from one iteration step as compared to the previous step is below a predefined threshold.

Advantageously, the step of comparing the first and the second trajectories comprises determining the geometrical transformation using an Iterative Closest Point method. For a description of this method, see https://en.wikipedia.org/wiki/lterative_closest_point and references therein.

Prior to searching and applying a geometrical transformation, the data extracted from the vehicle sensors can be processed. E.g., data points can be weighed. In particular, data points in highly curved portions of a trajectory could be weighed higher than data points in less curved portions of a trajectory. Also, in an effort to improve the data quality and in to order to find the best alignment of trails or trajectories, it, can be expedient to apply, e.g., some rejection methods on points at the edges of trails or trajectories. E.g., data point outliers can be rejected prior to searching and applying a geometrical transformation.

Advantageously, the step of comparing the first and the second trajectories comprises searching and applying a geometrical transformation each time a first trajectory of the vehicle has been determined and/or after the expiration of predefined time intervals, in particular regular time intervals.

Advantageously, the method according to the invention can comprise displaying at least a portion of the digital map for a user on a screen within the vehicle and the determined path of the vehicle can be displayed within the map. Thus, a user gets an enhanced information as regards their position in relation to the digital map.

Portions of the information contained in the digital map can be overruled or overwritten by new information as derived from the data extracted from the vehicle sensors. For instance, information in portions of a map can advantageously be discarded if, in said portions of the map, differences between the first trajectory the second trajectory are larger than a predefined threshold. Thus, the present invention also offers a solution to the problem of validating and/or updating digital maps.

Generally, the solution to the problem of map validation consists in a first step again in comparing a first trajectory which is extracted or taken from a digital map data and which is passed by the vehicle with a second trajectory which is derived from data of the vehicle sensors. E.g., a speed and a yaw rate measured by the vehicle sensors can be compared with the curvatures of the first trajectory as taken from the digital map. The comparison of the first with the second trajectories yields information on the similarity and differences of the trajectories or trails.

On the basis of this information it is possible to decide if the vehicle has traversed the same path as expected by the map, or, when the trajectories are dissimilar, if the respective map information should be discarded. The comparison of the first and second trajectories can be done es described hereinbefore, i.e., in particular by shifting the second trajectory onto the first trajectory in such a way that the differences or spacings, as measured, e.g., by RMS (root mean square deviation) between them is minimized. It can be expedient here as well to normalize the computed differences or spacings with respect to a length of the travelled path or a duration of the travelled time.

In this embodiment, the method according to the invention, again, requires only access to a map, e.g., data on curvatures of a first trajectory, and the measurement of, e.g., a speed and a yaw rate. These requirements are usually met by a car which has a standard navigation system. The solutions of the present invention to the problem of validating and/or updating digital maps provide a complementary feature without the need for complex map aggregation or extra sensors. The computational costs and memory usage is low. The solution is independent from prior knowledge of the area.

This overruling or overwriting can be considered to be the updating which takes place in the method for updating a digital map according to the invention. Uploading an updated digital map to a server allows an unlimited plurality of users to benefit from this new information.

### BRIEF DESCRIPTION OF THE DRAWINGS

Other features, purposes and advantages of the disclosure will become more explicit by means of reading the detailed statement of the non-restrictive embodiments made with reference to the accompanying drawings.
- Figure 1:: shows a schematic drawing of an embodiment of the system according to the invention;
- Figure 2:: shows diagrams illustrating the method for determining a path of a vehicle according to the invention; and
- Figure 3:: shows further diagrams illustrating a preferred variant of the method for determining a path of a vehicle according to the invention.

### DETAILED DESCRIPTION OF THE DRAWINGS

The same and equivalent components generally have the same reference number in the figures.

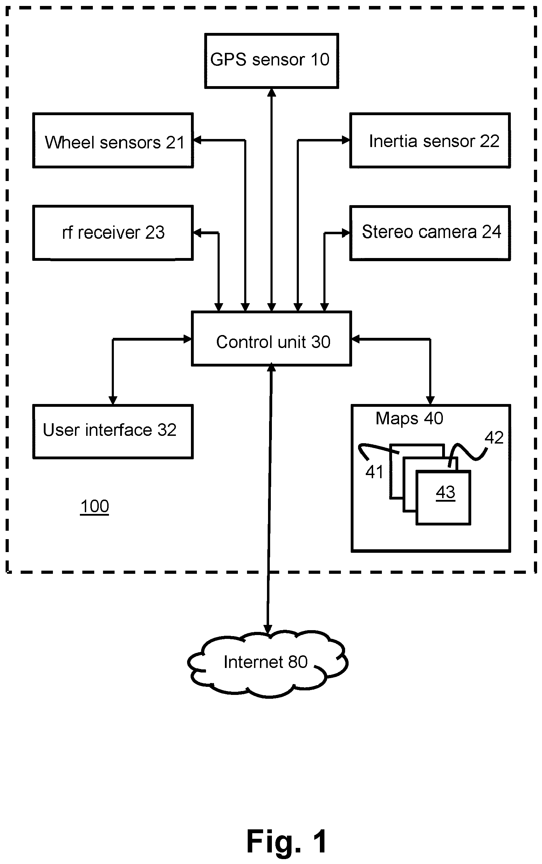

Figure 1 shows a diagrammatic sketch of system 100 for determining a path of a vehicle according to the invention. The system 100 is in particular suited for determining a path of a car. The embodiment of the system 100 shown in figure 1 comprises as essential components a plurality of digital maps 41, 42, 43, a control unit 30, a plurality of vehicle sensors 21,..,24 and a GPS sensor 10.

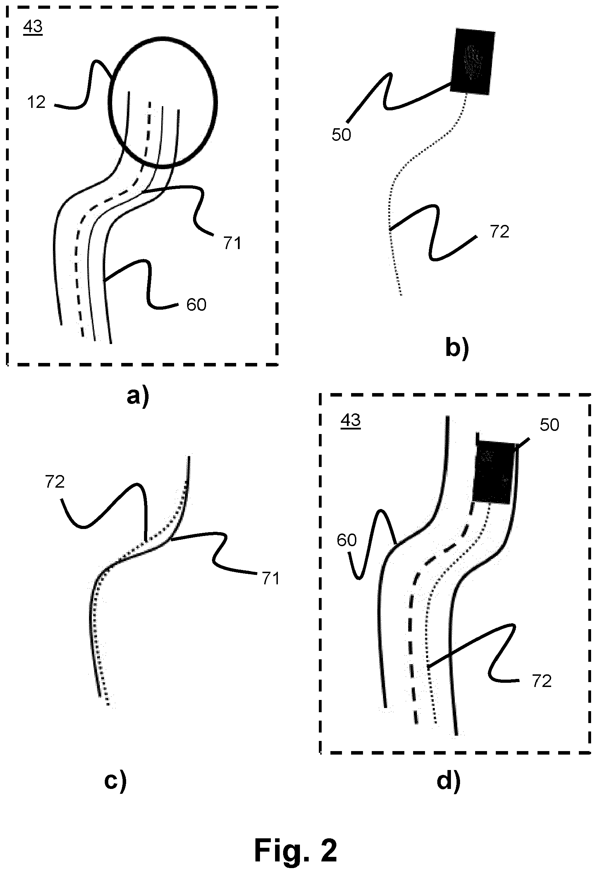

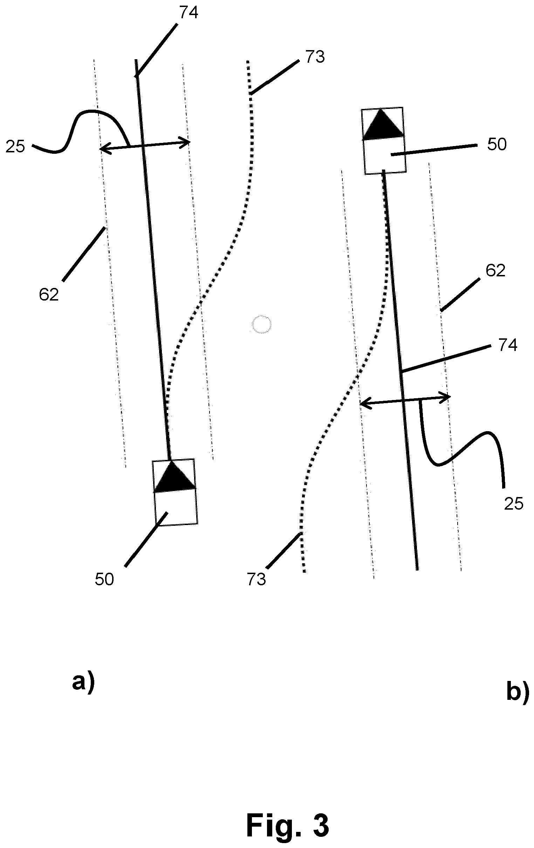

The vehicle sensors 21,..,24 are to be mechanically coupled to a vehicle 50 (see figures 2 and 3) and serve the purpose of measuring at least one of positions or movements of a vehicle 50 in space. The control unit 30 can, e.g., be a microcontroller or an FPGA, and is configured for controlling the vehicle sensors 21,..,24 and for interacting with the digital maps 41,..,43. More specifically, the control unit 30 can be configured to initiate measurements of the vehicle sensors 21,..,24 and to process measurement data of the vehicle sensors 21,..,24.

In the shown embodiment, the control unit 30 also interacts with the GPS sensor 10 and can be configured to initiate measurements of the GPS sensor 10 and to process measurement data of the GPS sensor 10. The control unit 30 is furthermore configured for determining a first trajectory 71 of the vehicle 50 over a time interval based on information extracted from one of the digital maps 41,..,43 (A). This will be explained hereinafter together with embodiments of the method for determining a path of a vehicle according to the invention in relation to figures 2 and 3.

The embodiment of the system 100 shown in figure 1 comprises furthermore an interface which is not shown in Figure 1, e.g., an rf-interface which allows a connection to the internet 80.

The system 100 furthermore has a user interface which can have, e.g., a touch screen for displaying data to a user and for an interaction of the user with the system. E.g., the user interface can have a user surface or user environment which allows a user to upload an update to one of the digital maps 41,..43 which has been determined by the method for updating information contained in a digital map according to the invention via the internet to a server. Via the interface to the internet 80 it is also possible to download updated maps to the system. The digital maps 41, 42, 43 are stored in a memory which can be part of the control unit 30.

The embodiment shown in figure 1 has as vehicle sensors a plurality of wheel sensors 21 which provide in each case information on a rotation speed and/or a rotation status of a specific wheel. There can preferably be a wheel sensor for each of the wheels of the vehicle 50. Both a velocity of the vehicle 50 as well as a yaw rate can be inferred from the measurement date of the wheel sensors 21. Furthermore there is an inertia sensor 22 which can serve, e.g., for measuring a speed of the vehicle 50 and a yaw rate of the vehicle. A position of the vehicle within a digital map can be determined by measurement data from the GPS sensor and/or the rf-receiver 23. The rf-receiver 23 can be configured, e.g., to receive signals from mobile telephone towers which can serve as landmarks. Finally, in the shown embodiment the system 100 has a stereo camera 24 which serves the purpose of providing measurement data with respect to an immediate vicinity of the vehicle 50.

According to the invention, the control unit 30 is furthermore configured furthermore for (B) determining, over said time interval, a second trajectory 72 of the vehicle 50 based on information extracted from the at least one vehicle sensor 21,..,24, (C) comparing the first and the second trajectories to identify differences between the information extracted from the digital map 41,..43 and the at least one vehicle sensor 21,..,24, and (D) using the identified differences to determine the path of the vehicle 50 in the digital map 41,..43.

Embodiments of the method for determining a path of a vehicle 50 according to the invention will be described in relation to figures 2 and 3.

Figure 2a) shows a digital map 43 having a diagrammatically depicted road 60. A first step of the method according to the invention, comprises determining a first trajectory 71 of the vehicle 50 over a time interval based on information extracted from the digital map 43.

In the shown embodiment, this first trajectory 71 is taken from the map 43 as a trail on the right lane of the road 60. The region 12 depicts a typical region of uncertainty of a GPS signal as provided by the GPS sensor 10. The uncertainty is larger than a width of the road 60. It is clear therefrom that, although a localisation of the vehicle with respect to the map 43 can be achieved with the GPS sensor, the precision of the localisation by the GPS sensor alone leaves something to be desired. Alternatively or additionally, signals from a mobile radio network received by the rf-receiver 23 could provide a localisation of the vehicle 50 in relation to the digital map 43.

The second step of the method according to the invention comprises determining, over said time interval, a second trajectory 72 of the vehicle 50 based on information extracted from the vehicle sensors 21,..,24 which are mechanically coupled to the vehicle 50. More specifically, measurement data from the wheel sensors 21 can provide a sequence, in each case for specific points in time, of values of a speed as well as a yaw rate. From these data the second trajectory 72 can be put together.

The third step of the method according to the invention then comprises comparing the first trajectory 71 with the second trajectory 72 to identify differences between the information extracted from the digital map 43 and the vehicle sensors 21, 22, 24.

In the embodiment shown in figure 2, this comparison comprises finding and applying a geometrical transformation which shifts the second trajectory 72 onto the first trajectory 71. The geometrical transformation is chosen preferably in such a way that differences between the first trajectory 71 and the shifted second trajectory 72 are minimized. The differences can be calculated by a suitable mathematical metric or measure. E.g., root mean square deviation (RMS) calculated for corresponding points on the first trajectory 71 and the second trajectory 72 can be used as a measure for the difference between the first trajectory 71 and the second trajectory 72.

In an effort to correct for the length of the considered time interval and/or the length of the first trajectory 71 and the second trajectory 72, the found differences can be normalized in relation to one of the length of first and/or second trajectory, i.e., the travelled path, and/or in relation to the length of the considered time interval, i.e., the travel time. The normalization is usually done by dividing the calculated difference by the travelled path or the length of the considered time interval.

More specifically, the geometrical transformation can be a transformation which preserves the distances between each pair of points in the transformed trajectory 72. Such transformations are known as rigid or isometrical transformations.

The finding of a suitable geometrical transformation can be done iteratively until a predefined threshold of alignment differential is reached or until a change in a determined difference between the first and the second trajectories from one iteration step as compared to the previous step is below a predefined threshold. The geometrical transformation can, e.g., be determined using an Iterative Closest Point method.

Figure 2c) shows the first trajectory 71 and the second trajectory 72 after the latter has been shifted by the geometrical transformation onto the first trajectory 71. The situation in figure 2c) shows the final result of an iterative process which minimizes the differences or spacings between the first trajectory 71 and the second trajectory. The differences between the first trajectory 71, i.e., the information from the digital map 43, and the second trajectory 72, i.e., the information from the vehicle sensors 21,..,24 can be seen in figure 2c). Also, it can be conceived from figure 2c) that the position or orientation of the second trajectory 72 cannot be changed without increasing the differences or spacings to the first trajectory 71.

Figure 2d) shows the shifted second trajectory in the context of the digital map 43. This is the result of the method according to the invention. One can see that the precision of the localisation of the vehicle 50 has much improved in comparison to the situation in figure 43 where the region 12 of uncertainty applies. Thus, the differences between trajectory 71 and trajectory 72 have, according the method of the invention, been used to determine a corrected path of the vehicle 50. This corrected path can be displayed in the digital map 43.

A further embodiment of the method according to the invention will be described in relation to figure 3. Figure 3a) shows a vehicle 50 and a trajectory 74 of this vehicle 50 as taken from a digital map. A width of uncertainty of trajectory 74 is indicated by 25. This uncertainty can in particular be due to a GPS uncertainty.

Figure 3a) shows that the trajectory 73, as of roughly half its length, deviates from the trajectory 7 by more than its the uncertainty interval 25. In this situation, according to a preferred embodiment of the invention, the information of the map in this particular portion of the map where the trajectory 73 is beyond the band 62 enveloping the trajectory 74, will be discarded. This information can be replaced the actual trajectory 73 as measured by the vehicle sensors 21,.., 24.

Figure 3b) shows a similar situation as figure 3a). Whereas in figure 3a) the trajectory 73 leaves the band 62 enveloping the trajectory 74, the trajectory 73 enters the band 62 enveloping the trajectory 74 at around half of its length in figure 3b). Correspondingly, the information in the portion of the map where the trajectory 73 is beyond the band 62 enveloping the trajectory 74 can be discarded. This information can be replaced the actual trajectory 73 as measured by the vehicle sensors 21,..,24. As set out above, the map can be updated according to the method of the invention in the described portions with the information as derived from the vehicle sensors 21,..,24. The updated maps can be uploaded to the cloud and, thus, be shared with a plurality of users.

### LIST OF REFERENCE NUMBERS

- 10: GPS-sensor
- 12: region of uncertainty of GPS signal
- 21: vehicle sensor, wheel sensors, mechanically coupled to vehicle 50
- 22: vehicle sensor, inertia sensor, mechanically coupled to vehicle 50
- 23: vehicle sensor, rf receiver, mechanically coupled to vehicle 50
- 24: vehicle sensor, stereo camera, mechanically coupled to the vehicle 50
- 25: uncertainty of trajectory 74
- 30: control unit
- 32: user interface
- 40: maps
- 41: map
- 42: map
- 43: map
- 50: vehicle, car
- 60: road on map
- 62: band of uncertainty of trajectory 74, band of GPS uncertainty
- 71: first trajectory of the vehicle 50 taken from map 43
- 72: second trajectory of the vehicle 50 measured with vehicle sensors 21,..,24
- 73: second trajectory of the vehicle 50 measured with vehicle sensors 21,..,24
- 74: first trajectory of the vehicle 50 taken from a map
- 80: internet
- 100: System for determining a position of a vehicle according to the invention

## Claims

1. Method for determining a path of a vehicle comprising the following steps:
determining a first trajectory (71) of the vehicle (50) over a time interval based on information extracted from a digital map (41,..43),
determining, over said time interval, a second trajectory (72) of the vehicle (50) based on information extracted from at least one vehicle sensor (21,..,24),
comparing the first and the second trajectories to identify differences between the information extracted from the digital map (41,..43) and the at least one vehicle sensor (21,..,24), and
determining a corrected path of the vehicle based on the identified differences.

2. Method according to claim 1,
wherein the step of determining the corrected path of the vehicle comprises determining localisation offsets between the information extracted from the digital map (41,..43) and the at least one vehicle sensor (21,..,24).

3. Method according to one of the claims 1 to 2,
wherein the step of determining the second trajectory (72) of the vehicle (50) comprises measuring at least a speed and a yaw rate by the vehicle sensors (21,..,24).

4. Method according to one of the claims 1 to 3,
wherein the step of determining the second trajectory (72) of the vehicle (50) comprises averaging the measurement data of at least one of the vehicle sensors (21,..,24) using moving averages.

5. Method according to one of the claims 1 to 4,
wherein the step of determining the second trajectory (72) of the vehicle (50) comprises determining a localisation of the vehicle (50) within the digital map (41,..,43) by a sensor which interacts with an external entity.

6. Method according to one of the claims 1 to 5,
wherein the step of comparing the first and the second trajectories comprises shifting the second trajectory (71, 72) onto the first trajectory (71) by a geometrical transformation.

7. Method according to claim 6,
wherein the geometrical transformation minimizes the differences between the first trajectory and the shifted second trajectory (72).

8. Method according to claim 6 or 7,
wherein the geometrical transformation comprises at least one of the following:
• a translation;
• a rotation;
• a scaling;
• a shearing.

9. Method according to one of the claims 6 to 8,
wherein the step of comparing the first and the second trajectories comprises determining the geometrical transformation by application of an Iterative Closest Point method.

10. Method according to one of the claims 6 to 9
wherein the step of comparing the first and the second trajectories comprises applying the geometrical transformation
• each time a first trajectory (71) of the vehicle (50) has been determined and/or
• after the expiration of predefined time intervals.

11. Method according to one of the claims 1 to 10,
further comprising the step of downloading the digital map (41,..,43) from a server.

12. Method according to one of the claims 1 to 11,
further comprising the step of discarding information in portions of a map (41,..,43) if, in said portions of the map (41,..43), differences between the first trajectory (71) the second trajectory (72) are larger than a predefined threshold.

13. Method for updating information contained in a digital map, comprising the following steps:
determining a path of a vehicle according to the method according to one of the claims 1 to 12,
updating at least portions of the digital map (41,..43) based on the determined path of the vehicle.

14. Method according to claim 13,
further comprising the step of communicating to other vehicles at least portions of the updated digital map (41,..,43).

15. System for determining a path of a vehicle,
comprising:
a digital map (41,..,43),
at least one vehicle sensor (21,..,24) for measuring at least one of positions or movements of the vehicle (50) in space,
a control unit (30) for controlling the at least one vehicle sensor (21,..,24) and for interacting with the digital map (41,..,43),
wherein the control unit (30) is configured for determining a first trajectory (71) of the vehicle (50) over a time interval based on information extracted from the digital map (41,..,43),
wherein the control unit (30) is configured furthermore for determining, over said time interval, a second trajectory (72) of the vehicle (50) based on information extracted from the at least one vehicle sensor (21,..,24),
comparing the first and the second trajectories to identify differences between the information extracted from the digital map (41,..43) and the at least one vehicle sensor (21,..,24),
and determining a corrected path of the vehicle based on the identified differences.
